# EUROPEAN PATENT APPLICATION

(11) **EP 2 437 104 A1**
(43) Date of publication of application: **04.04.2012**
(21) Application number: 10780434.6
(22) Date of filing: 17.05.2010
(51) Int. Cl.: G02F 1/13357, G02B 27/01, G02F 1/133

(54) **LIQUID CRYSTAL DISPLAY DEVICE**

(30) Priority: 29.05.2009 JP 2009129849
(71) Applicant: Nippon Seiki Co., Ltd., Niigata 940-8580 (JP)
(72) Inventor: Kumaki, Takaya, Nagaoka, Niigata (JP)
(74) Representative: Jackson, Richard Eric
(86) International application number: PCT/JP2010/058258
(87) International publication number: WO 2010/137479

(57) **Abstract**

Provided is a liquid crystal display device wherein transmitted illumination is uniformly performed to a liquid crystal display panel and display light (L) has a desired chromaticity. An illuminating means (19) is provided with a first light emitting element (20) which emits first light (L1) having a first color, and a second light emitting element (21) which emits second light (L2) having a second color. A liquid crystal display panel (18) is illuminated by means of illuminating light (L3) which includes the first light (L1) and the second light (L2). A polarization member (27) reflects the illuminating light (L3). A detecting means detects (28) illuminating light (L4) which has passed through the polarization member (27), and outputs chromaticity data. Based on the chromaticity data, a control means (56) adjusts power to be supplied to the first light emitting element (20) and/or second light emitting element (21). The polarization member (27) is composed of a wire grid polarization plate.

## Description

### Technical Field

The present invention relates to a liquid crystal display apparatus having a liquid crystal display panel and a light-emitting element such as a light-emitting diode for illuminating the liquid crystal display panel.

### Background Art

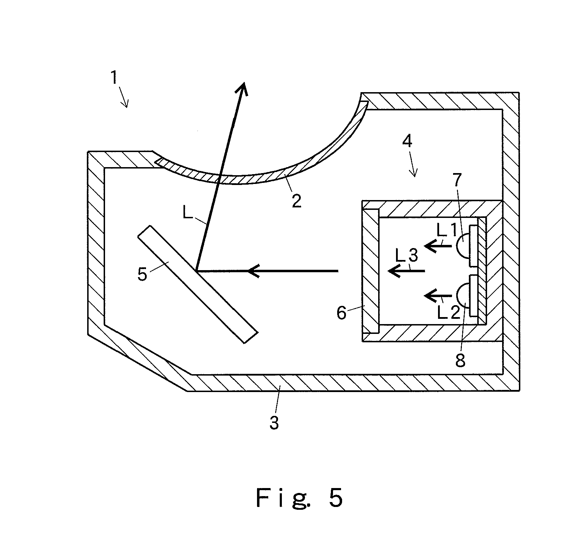

Various proposals have conventionally been made on head-up displays for vehicle using a liquid crystal display apparatus, and an example thereof is disclosed in Patent Document 1. Such a head-up display 1 for vehicle projects display light L onto a windshield of a vehicle or a semi-transmitting plate referred to as a combiner to display a virtual image. The head-up display 1 for vehicle is provided by putting a liquid crystal display apparatus 4 and a reflecting mirror 5 in a housing 3 having a light-transmitting window portion 2 such that the display light L emitted by the liquid crystal display apparatus 4 is reflected by the reflecting mirror 5 and then projected onto the windshield or the combiner (see Fig. 5).

The liquid crystal display apparatus 4 has a liquid crystal display panel 6 and light-emitting diodes 7 and 8 for transmissively illuminating the liquid crystal display panel 6. The light-emitting diodes 7 and 8 are supplied with predetermined power from a driving circuit, not shown, to emit light. The light-emitting diode 7 emits green light L1, whereas the light-emitting diode 8 emits red light L2. The liquid crystal display panel 6 is illuminated transmissively by illumination light L3 provided by mixing the green light L1 emitted by the light-emitting diode 7 and the red light L2 emitted by the light-emitting diode 8.

### Prior Art Reference

### Patent Document

Patent Document 1: JP-A-2003-295105

### Disclosure of the Invention

### Problems that the Invention is to Solve

Since the brightness of emitted light of each of the light-emitting diodes 7 and 8 varies with ambient temperature, the liquid crystal display apparatus has the problem in that the illumination light L3 may not have a desired chromaticity but have a somewhat intense green color or red color. To solve the problem, it is contemplated that a color sensor for detecting the chromaticity of the illumination light L3 is provided to output chromaticity data which is based on to adjust a voltage applied to the light-emitting elements 7 and 8 so that the illumination light L3 has a desired chromaticity at all times. When the color sensor is placed between the light-emitting diodes 7 and 8 and the liquid crystal display panel 6, however, the color sensor may obstruct the illumination light L to prevent the uniform transmissive illumination of the liquid crystal display panel 6.
It is an object of the present invention to provide a liquid crystal display apparatus in which a liquid crystal display panel is uniformly illuminated transmissively and display light L has a desired chromaticity.

### Means for Solving the Problems

The present invention has a liquid crystal display panel 18, illuminating means 19 for emitting illumination light L3 illuminating the liquid crystal display panel 18, a polarizing member 27 reflecting the illumination light L3, and detecting means 28 for detecting the chromaticity of the illumination light L3 transmitted through the polarizing member 27.

The present invention has a liquid crystal display panel 18, illuminating means 19 including a first light-emitting element 20 emitting first light L1 having a first color and a second light-emitting element 21 emitting second light L2 having a second color, for illuminating the liquid crystal display panel 18 with illumination light L3 containing the first light L1 and the second light L2, a polarizing member 27 reflecting the illumination light L3, detecting means 28 for detecting the illumination light L4 transmitted through the polarizing member 27 to output chromaticity data, and control means 56 for adjusting power to be supplied to at least one of the first light-emitting element 20 and the second light-emitting element 21 based on the chromaticity data.

In the present invention, the polarizing member 27 is formed of wire grid polarizing plate.

### Advantage of the Invention

Since the detecting means detects the chromaticity of the illumination light transmitted through the polarizing member, the illumination light is not obstructed by the detecting means and thus the liquid crystal display panel is uniformly illuminated transmissively. In addition, a desired chromaticity is achieved for the display light L.

### Brief Description of the Drawings

[Fig. 1] A schematic diagram showing a head-up display illustrating an embodiment of the present invention.
[Fig. 2] A section view showing the embodiment.

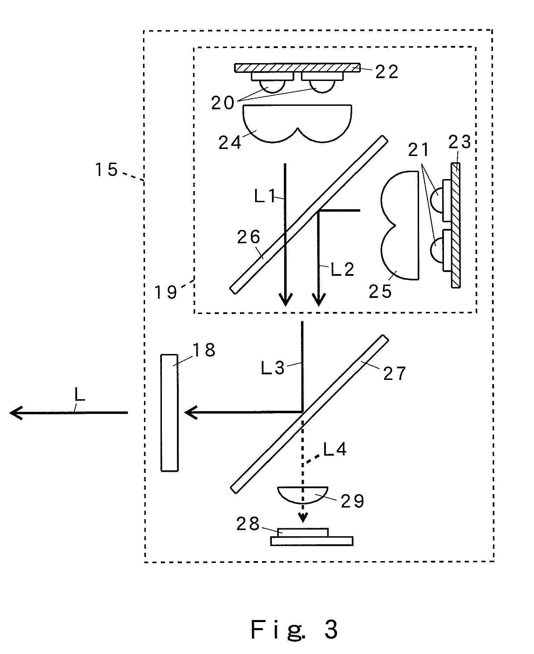

[Fig. 3] A side view of a liquid crystal display apparatus illustrating the embodiment.
[Fig. 4] A block diagram showing the embodiment.
[Fig. 5] A section view showing a prior art.

### Mode for Carrying Out the Invention

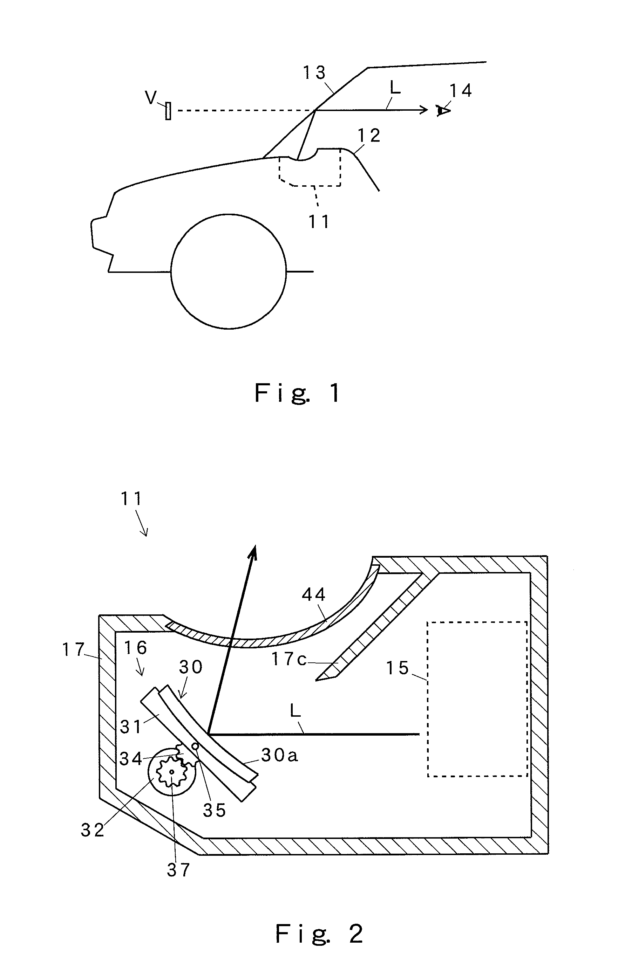

An embodiment of the present invention will hereinafter be described with reference to the accompanying drawings. A head-up display 11 is placed within a dashboard 12 of a vehicle (see Fig. 1). Display light L projected by the head-up display 11 is reflected by a windshield 13 toward an observer 14. The observer 14 can visually recognize a virtual image V superimposed on a background landscape.

The head-up display 11 includes a liquid crystal display apparatus 15, a reflector 16 and the like which are put in a housing 17. The liquid crystal display apparatus 15 has a liquid crystal display panel 18, an illuminator 19 (illuminating means), a polarizing member 27, a color sensor 28 (detecting element), and a condensing lens 29.

The liquid crystal display panel 18 is provided by adhering a polarizing plate to each of the front and back sides of a liquid crystal cell including a liquid crystal sealed in between a pair of light-transmitting substrates each having a transparent electrode film formed thereon. The liquid crystal display panel 18 digitally displays the speed of the vehicle.
The illuminator 19 has a light-emitting diode 20 (first light-emitting element), a light-emitting diode 21 (second light-emitting element), circuit substrates 22 and 23, condensing lenses 24 and 25, and dichroic mirror 26.

The light-emitting diode 20 emits green light L1 (first light) and is mounted on the circuit substrate 22. The light-emitting diode 21 emits red light L2 (second light) and is mounted on the circuit substrate 23. Each of the condensing lenses 22 and 23 is formed of light-transmitting resin such as polycarbonate and is placed opposite to the light-emitting diode 20 and the light-emitting diode 21, respectively. The dichroic mirror 26 is placed obliquely, and transmits the green light L1 emitted by the light-emitting diode 20 and reflects the red light L2 emitted by the light-emitting diode 21. The liquid crystal display panel 18 is transmissively illuminated by orange light L3 (illumination light) resulting from the mixing of the green light L1 and the red light L2 by the dichroic mirror 26.

The polarizing member 27 is formed of wire grid polarizing plate and reflects a polarized component of a predetermined direction (for example, a direction perpendicular to the sheet) of the orange light L3. The polarizing plate on the back side of the liquid crystal display panel 18 has a polarization axis of the predetermined direction. The color sensor 28 detects the chromaticity of a portion L4 of the orange light L3 transmitted through the polarizing member 27 and outputs the chromaticity data to a microcomputer, later described. The condensing lens 29 condenses the portion L4 of the orange light L3 transmitted through the polarizing member 27 to the color sensor 28. The portion L4 of the orange light L3 is a polarized component which does not contribute to the illumination of the liquid crystal display panel 18.

The reflector 16 has a concave mirror 30, a holding member 31, and a stepping motor 32. The concave mirror 30 is provided by evaporating metal (for example, aluminum) onto resin (for example, polycarbonate) to form a reflecting face 30a. The reflecting face 30a is a concave face on which the display light L emitted by the liquid crystal display apparatus 15 is enlarged and the virtual image V is displayed. The concave mirror 30 is bonded to the holding member 31 by a double-faced tape. The holding member 31 is formed of resin (for example, ABS) and has a gear portion 34 and a shaft portion 35 integrally formed therewith. The shaft portion 35 of the holding member 31 is pivotally supported on the housing 17.

A gear 37 is attached to a rotation shaft of the stepping motor 32, and the gear 37 engages with the gear portion 34 of the holding member 31. The concave mirror 30 is supported to be rotatable together with the holding member 31. The stepping motor 32 can be used to rotate the concave mirror 30 to adjust the projection direction of the display light L. The observer 14 manipulates a press button switch (not shown) to adjust the angle of the concave mirror 30 so that the display light L is reflected to the position of his eyes (so that the virtual image V can be visually recognized).

The housing 17 accommodates the liquid crystal display apparatus 15 and the reflector 16. The housing 17 is provided with a window portion 44 through which the display light L exits. The window portion 44 is formed of light-transmitting resin (for example, acrylic resin) and has a curved shape. The housing 17 is provided with a light-shield wall 17c to eliminate a phenomenon (wash-out) in which external light such as sunlight is incident on the liquid crystal display apparatus 15 to prevent clear recognition of the virtual image V. The light-shield wall 17c has a flat shape and is formed to hang obliquely from the top of the housing 17.

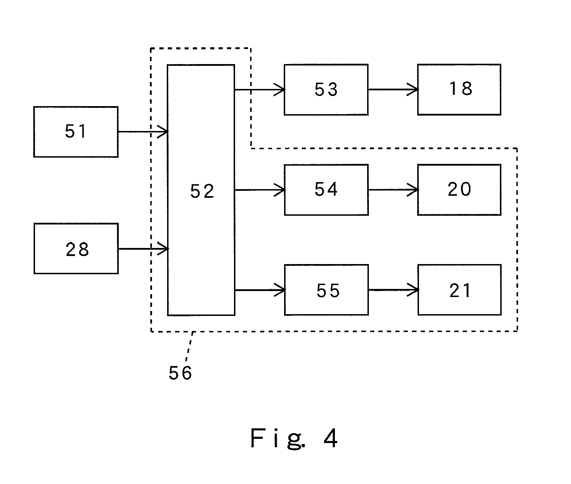

Fig. 4 is a block diagram showing the electrical configuration of the liquid crystal display apparatus 15. Reference numeral 51 shows a speed sensor which detects the speed of the vehicle and outputs the speed data to a microcomputer 52. The color sensor 28 outputs the chromaticity data to the microcomputer 52. The microcomputer 52 outputs a driving signal to the liquid crystal display panel 18 through a driving circuit 53 to cause the liquid crystal display panel 18 to display the speed of the vehicle and outputs a driving signal to the light-emitting diodes 20 and 21 through driving circuits 54 and 55, respectively, to cause the light-emitting diodes 20 and 21 to emit light. Control means 56 is formed of the microcomputer 52 and the driving circuits 54 and 55 and adjusts a driving voltage applied to the light-emitting diodes 20 and 21 based on the chromaticity data output from the color sensor 28 so that the orange light L3 has a desired chromaticity.

In the present embodiment, the portion L4 of the orange light L3 transmitted through the polarizing member 27 is used to detect the chromaticity of the orange light L3 by the color sensor 28. Since the power supplied to the light-emitting diodes 20 and 21 is adjusted on the basis of the chromaticity data output from the color sensor 28, a desired chromaticity is achieved for the display light L. In addition, the color sensor 28 does not obstruct the orange light L3, so that the liquid crystal display panel is uniformly illuminated transmissively.

The present invention is not limited to the present embodiment, and various modifications can be made. For example, while the present embodiment employs the two light-emitting diodes 20 and 21 emitting the light of different colors, three light-emitting diodes emitting light of different colors may be used instead.

### Industrial Applicability

The present invention is applied to a liquid crystal display apparatus having a liquid crystal display panel and a light-emitting element such as a light-emitting diode for illuminating the liquid crystal display panel.

### Description of Reference Numerals and Signs

- 18: LIQUID CRYSTAL DISPLAY PANEL
- 20: LIGHT-EMITTING DIODE (FIRST LIGHT-EMITTING ELEMENT)
- 21: LIGHT-EMITTING DIODE (SECOND LIGHT-EMITTING ELEMENT)
- 27: POLARIZING MEMBER
- 28: COLOR SENSOR (DETECTING ELEMENT)
- 56: CONTROL MEANS
- L1: GREEN LIGHT (FIRST LIGHT)
- L2: RED LIGHT (SECOND LIGHT)
- L3: ORANGE LIGHT (ILLUMINATION LIGHT)

## Claims

1. A liquid crystal display apparatus **characterized by** comprising a liquid crystal display panel, illuminating means for emitting illumination light illuminating the liquid crystal display panel, a polarizing member reflecting the illumination light, and detecting means for detecting a chromaticity of the illumination light transmitted through the polarizing member.

2. A liquid crystal display apparatus **characterized by** comprising:
a liquid crystal display panel;
illuminating means including a first light-emitting element emitting first light having a first color and a second light-emitting element emitting second light having a second color, for illuminating the liquid crystal display panel with illumination light containing the first light and the second light;
a polarizing member reflecting the illumination light;
detecting means for detecting the illumination light transmitted through the polarizing member to output chromaticity data; and
control means for adjusting power to be supplied to at least one of the first light-emitting element and the second light-emitting element based on the chromaticity data.

3. The liquid crystal display apparatus according to claim 1 or 2, **characterized in that** the polarizing member is formed of wire grid polarizing plate.
